# EUROPEAN PATENT APPLICATION

(11) **EP 2 560 169 A2**
(43) Date of publication of application: **20.02.2013**
(21) Application number: 12179510.8
(22) Date of filing: 07.08.2012
(51) Int. Cl.: G11B 17/051, G11B 17/028

(54) **Optical disc device**

(30) Priority: 18.08.2011 JP 2011178740
(71) Applicant: Funai Electric Co., Ltd., Daito-shi Osaka 574-0013 (JP)
(72) Inventor: Teraoka, Masahito, Osaka 574-0013 (JP)
(74) Representative: Grünecker, Kinkeldey, Stockmair & Schwanhäusser

(57) **Abstract**

This optical disc device is provided with a disc guide unit for guiding movement of an optical disc while also sliding together with the optical disc as the optical disc is being inserted into the device. A plurality of types of regulating units for abutting the optical disc and regulating travel of the optical disc in an insertion direction are provided to the disc guide unit so as to be changed in accordance with a diameter of the optical disc.

## Description

### BACKGROUND OF THE INVENTION

### 1. Field of the Invention

The present invention relates to an optical disc device used in the playback of information recorded on an optical disc and/or used in the recording of information on an optical disc.

### 2. Description of Related Art

An optical disc device is conventionally used in order to play back information recorded on a Blu-Ray Disc ("BD"), a Digital Versatile Disc ("DVD"), a Compact Disc ("CD"), or other optical disc, and/or in order to record information on these optical discs. Among such optical disc devices, there exists a "slot-in" optical disc device. With a slot-in type optical disc device, an optical disc is inserted directly into the device without being loaded in a disc tray (provided to allow the disc to be inserted into or removed from the device).

Conventionally, an optical disc device is typically able to support optical discs of a large diameter (e.g., 12 cm) and of a small diameter (e.g., 8 cm), and the slot-in optical disc device is no exception to this point (for example, see JP-A-2000-298904 and JP-A-H03-296962).

### SUMMARY OF THE INVENTION

The present applicants have developed an optical disc device (a slot-in optical disc device) provided with a disc transport mechanism comprising a transport roller for transporting an optical disc and a disc guide unit for guiding the optical disc to a predetermined position while also sliding together with the optical disc in an optical disc transport direction. The disc transport mechanism comprising the disc guide unit is a configuration that is not disclosed in JP-A-2000-298904 or JP-A-H03-296962.

As development progressed on the disc transport mechanism comprising the aforementioned disc guide unit, it was desirable to increase the chucking efficacy in both a case where support is provided for a large-diameter optical disc and a case where support is provided for a small-diameter optical disc. "Chucking" as mentioned herein refers to a state where the center of an optical disc having been inserted into the optical disc device is aligned with the shaft of rotation of a motor for causing the optical disc to rotate.

In view whereof, an objective of the present invention is to provide an optical disc device by which it is possible to provide support for a plurality of types of optical discs having different diameters and with which any type of optical disc can be inserted with few problems. The technology provided by the present invention is suitable for a "slot-in"-type optical disc devices.

In order to achieve the foregoing objective, in an aspect of the optical disc device of the present invention (a first aspect), an optical disc device is provided with a disc guide unit for guiding movement of an optical disc while also sliding together with the optical disc as the optical disc is being inserted into the device, wherein a plurality of types of regulating units for abutting the optical disc and regulating travel of the optical disc in an insertion direction are provided to the disc guide unit so as to be changed in accordance with a diameter of the optical disc.

In the present aspect, the plurality of types of regulating units for regulating the travel of the optical disc in the insertion direction are provided so as to be changed as appropriate in accordance with the diameter of the optical disc. For this reason, in a case where an optical disc of any diameter is introduced into the optical disc device, the optical disc can be guided accurately to a predetermined position and the chucking efficacy can be improved. Accordingly, the optical disc device of the present aspect has favorable ease of use for a user.

In a preferred aspect (a second aspect), in the optical disc device of the aforedescribed first aspect, travel in the insertion direction is changed in the disc guide unit in accordance with the diameter of the optical disc. The present aspect is an aspect suitable for a "slot-in"-type optical disc device.

In a preferred aspect (a third aspect), in the optical disc device of the aforedescribed first or second aspect, the plurality of types of regulating units comprise a first regulating unit for regulating the travel of a large-diameter optical disc in the insertion direction and a second regulating unit for regulating the travel of a small-diameter optical disc in the insertion direction. The present aspect is an aspect suitable for an optical disc device that can be adopted for both of, for example, an optical disc having a diameter of 12 cm (an example of a large-diameter optical disc) and an optical disc having a diameter of 8 cm (an example of a small-diameter optical disc).

There may also be adopted an aspect (a fourth aspect) of the optical disc device of any of the aforedescribed first through third aspects, wherein the optical disc device is further provided with a first chassis and a second chassis provided so as to cover an opening of the first chassis, the first chassis being provided with a loading unit which can be made to rotate by a drive unit and on which the optical disc is loaded, and the second chassis being provided with a holding unit for clamping the optical disc together with the loading unit and with the disc guide unit. The present aspect is an aspect suitable for a "slot-in"-type optical disc device.

There may also be adopted an aspect (a fifth aspect) of the optical disc device of the aforedescribed fourth aspect, wherein the second chassis is provided with a movable part which can be turned and to which the disc guide unit and the holding unit are attached, the turning of the movable part being used to allow the optical disc to be clamped by the loading unit and the holding unit.

In the optical disc device of the aforedescribed fifth aspect, there is preferably adopted an aspect (a sixth aspect) wherein the disc guide unit is provided with a contact prevention unit for preventing contact between the optical disc and an optical pickup disposed on the first chassis. According to the present aspect, the likelihood that the optical disc or the optical pickup provided within the optical disc device will be damaged can be reduced.

In the optical disc device of any of the aforedescribed first through sixth aspects, there may also be adopted an aspect wherein the disc guide unit has a plate-shaped body part; and a plurality of boss parts projecting from a plate surface of the body part, and serving as the regulating units. According to the present aspect, it is easier to achieve a configuration in which chucking error is less prone to occur with an optical disc of any diameter, and in which the optical disc is more readily guided to the predetermined position.

According to the present invention, it is possible to provide an optical disc device by which it is possible to provide support for a plurality of types of optical discs having different diameters and with which insertion error is less prone to occur with any type of optical disc. The present invention is able to provide a technology suitable for a "slot-in"-type optical disc device.

### BRIEF DESCRIPTION OF THE DRAWINGS

Fig. 1 is a schematic perspective view illustrating an example of an optical disc player (or optical disc recorder) in which the optical disc device of the present invention has been adopted;
Fig. 2 is a schematic front view illustrating the configuration of an optical disc device of a present embodiment;
Fig. 3 is a schematic top view of a lower chassis constituting the optical disc device of the present embodiment;
Fig. 4 is a schematic top view of an upper chassis constituting the optical disc device of the present embodiment;
Fig. 5 is a schematic plan view of a case where the upper chassis constituting the optical disc device of the present embodiment is viewed from a back surface side;
Fig. 6A is a schematic top view for describing a configuration of a disc guide provided to the optical disc device of the present embodiment;
Fig. 6B is a schematic bottom view for describing the configuration of the disc guide provided to the optical disc device of the present embodiment;
Fig. 6C is a schematic front view for describing the configuration of the disc guide provided to the optical disc device of the present embodiment;
Fig. 7 is a schematic top view of the optical disc device, in a drawing used to describe an operation of the optical disc device of the present embodiment;
Fig. 8A is a drawing used to describe a configuration and action of a sliding part comprised in a drive mechanism provided to the optical disc device of the present embodiment;
Fig. 8B is a drawing used to describe the configuration and action of the sliding part included in the drive mechanism provided to the optical disc device of the present embodiment;
Fig. 8C is a drawing used to describe the configuration and action of the sliding part included in the drive mechanism provided to the optical disc device of the present embodiment;
Fig. 9 is a schematic plan view illustrating the relationship between a large-diameter optical disc and the disc guide; and
Fig. 10 is a schematic plan view illustrating the relationship between a small-diameter optical disc and the disc guide.

### DETAILED DESCRIPTION OF PREFERRED EMBODIMENTS

The following provides a description of an embodiment of the optical disc device of the present invention, with reference to the accompanying drawings. The optical disc device of the present invention can be adopted for, for example, a BD player, DVD player, or other optical disc player, for a BD recorder, DVD recorder, or other optical disc recorder, and the like. "Optical disc player" and "optical disc recorder" as mentioned herein are not limited to those of a stationary type disposed in a household, but rather have a meaning that also comprises, for example, those for portable use or for automotive use, and also have a meaning that further comprises, for example, those integrally attached to a television receiver, a PC, or the like.

### (Configuration of the optical disc device)

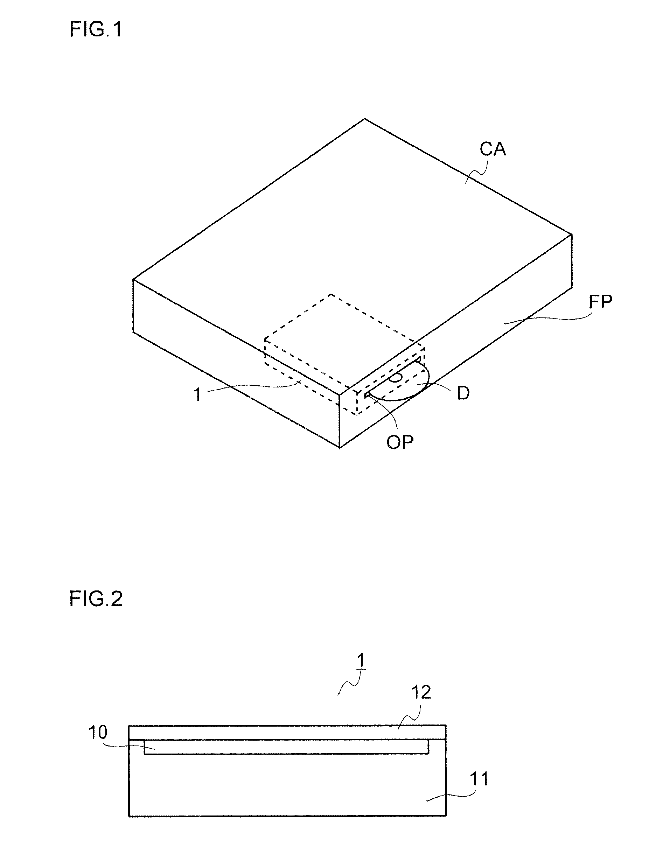

FIG. 1 is a schematic perspective view illustrating an example of an optical disc player (or optical disc recorder) in which the optical disc device of the present invention has been adopted. As illustrated in FIG. 1, an optical disc device 1 according to an embodiment of the present invention is built into the interior of a casing CA of the optical disc player. An opening OP is formed at a front surface panel FP of the casing CA, and it is possible to insert an optical disc D into the optical disc device 1 through the opening OP.

FIG. 2 is a schematic front view illustrating the configuration of the optical disc device 1 of the present embodiment. As illustrated in FIG. 2, the optical disc device 1 is provided with a lower chassis 11 and an upper chassis 12. The lower chassis 11 is formed of, for example, a resin, and the upper chassis 12 is formed of, for example, a sheet metal; however, no particular limitation is thereby given in regard to the materials. The upper chassis 12 is disposed so as to cover an upper surface opening of the lower chassis 11, and is fixed to the lower chassis 11 using, for example, a screw (not shown). An opening 10 for the insertion of the optical disc D is formed on a side surface, serving as a front surface side, of the optical disc device 1 to which the lower chassis 11 and the upper chassis 12 are provided.

The lower chassis 11 is an example of the first chassis of the present invention, and the upper chassis 12 is an example of the second chassis of the present invention.

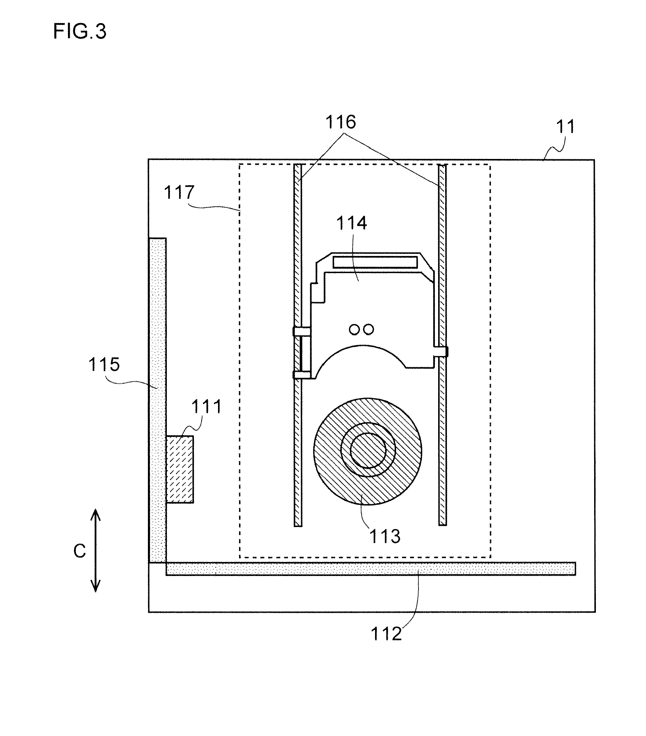

FIG. 3 is a schematic front view of the lower chassis 11 constituting the optical disc device 1 of the present embodiment. As illustrated in FIG. 3, a motor 111, a transport roller 112, a turntable 113, and an optical pickup 114 are provided to the interior of the lower chassis 11, which is formed in a box shape. The motor 111 drives the transport roller 112 via a plurality of cog wheels (not shown in detail). The motor 111 is used also to drive a drive mechanism 115 for making it possible to cause a movable part of the upper chassis 12 (equivalent to the movable plate, a more detailed description of which shall follow) to turn. The drive mechanism 115 comprises a rack and/or cog wheel.

The transport roller 112 is provided closer to the front surface of the optical disc device 1 (the surface to which the opening 10 is provided), and is driven in a case where the optical disc D is inserted into the device as well as in a case where the optical disc D is ejected from the device. The direction in which the optical disc D is transported by the driving of the transport roller 112 is the direction of the arrow C in FIG. 3 (the vertical direction in FIG. 3). The turntable 113 is rotated by a motor (not shown) disposed on a lower side of a table. The turntable 113 functions as a loading unit of the optical disc D having been inserted into the optical disc device 1; the optical disc D can be rotated together with the rotation of the turntable 113. The turntable 113 is an example of the loading unit of the present invention.

The optical pickup 114 is slidably supported by two guide shafts 116 extending in a direction parallel to the transport direction of the optical disc D (the direction of the arrow C). A motor and lead screw (not shown) are used for movement along the guide shafts 116 of the optical pickup 114. The optical pickup 114 irradiates the optical disc D with light, and also receives reflected light from the optical disc D. The optical pickup 114 is used to read information recorded on the optical disc D and/or to write information onto the optical disc.

In the optical disc device 1 of the present embodiment, the turntable 113 and the optical pickup 114 are incorporated in a base 117 made of sheet metal, a configuration being adopted where the base 117 is attached to the lower chassis 11. Although an illustration has been forgone, a variety of substrates and wires needed in the operation of the optical disc device 1 are disposed on the lower chassis 11 (or on the base 117).

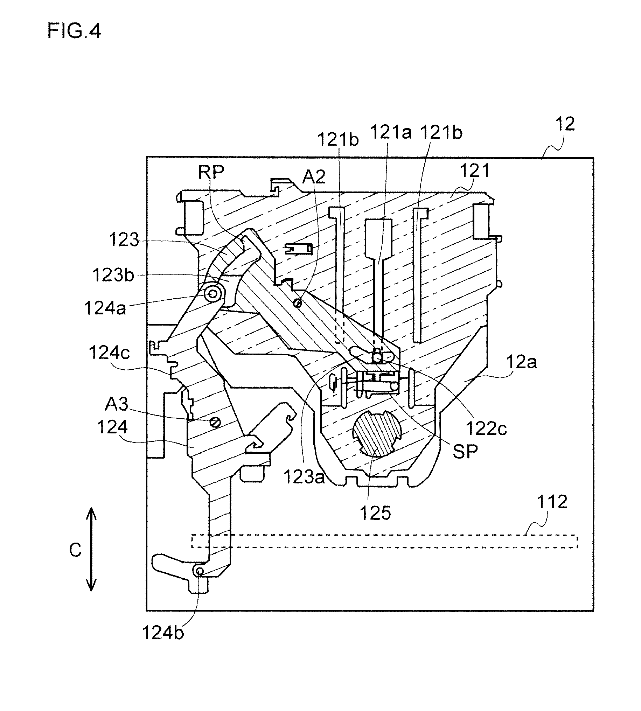

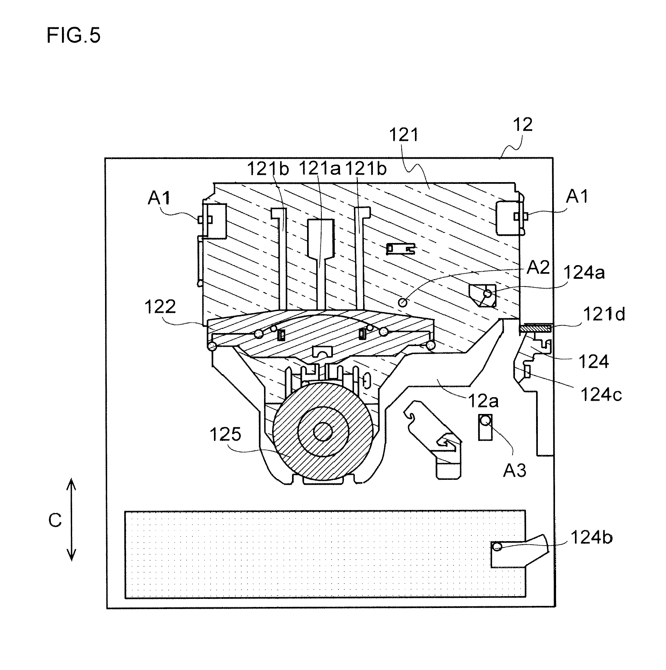

FIG. 4 is a schematic top view of the upper chassis 12 constituting the optical disc device 1 of the present embodiment. FIG. 5 is a schematic plan view of a case where the upper chassis 12 constituting the optical disc device 1 of the present embodiment is viewed from a rear surface (lower) side. In order to facilitate an understanding of positional relationships, the transport roller 112 is illustrated in FIG. 4 by a dashed line.

As illustrated in FIGS. 4 and 5, an opening 12a is formed over a broad range on the upper chassis 12. A movable plate 121 made of sheet metal (an example of the movable part of the present invention) is disposed so as to overlap with the opening 12a. The movable plate 121 is able to turn about a shaft of rotation A1 (see FIG. 5) relative to a body part of the upper chassis 12. A coil spring, one end of which is attached to the body part of the upper chassis 12, has another end attached to the movable plate 121. For this reason, the movable plate 121 assumes a state of having been pulled up toward the body part of the upper chassis 12. A clamper 125 (an example of the holding unit of the present invention) for clamping the optical disc D together with the turntable 113 is attached closer to a frontward side of the movable plate 121 (closer to the front surface of the optical disc device 1, at the bottom of FIGS. 4 and 5).

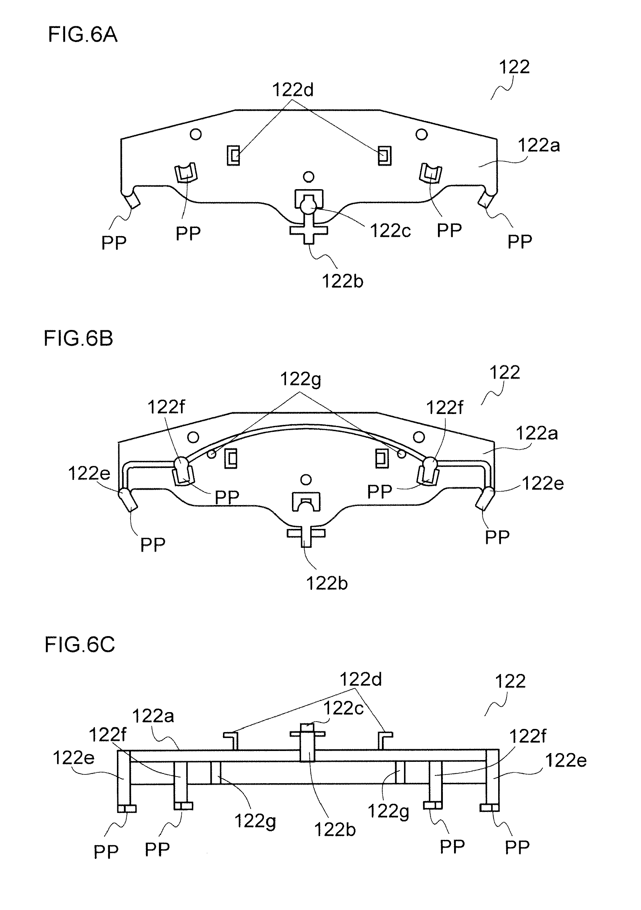

As illustrated in FIG. 5, a disc guide 122 (an example of the disc guide unit of the present invention) made of resin and capable of sliding along the transport direction of the optical disc D (the direction of the arrow C) is attached to the rear surface side of the movable plate 121. The configuration of the disc guide 122 shall now be described herein, with reference to FIGS. 6A, 6B, and 6C. FIG. 6A is a top view of the disc guide 122, FIG. 6B is a bottom view of the disc guide 122, and FIG. 6C is a front view of the disc guide 122. FIG. 6B is equivalent to a drawing as viewed from the same direction as FIG. 5.

As illustrated in FIGS. 6A, 6B, and 6C, the disc guide 122 has a plate-shaped body part 122a. A rail-shaped projecting part 122b is formed on a center part of an upper surface of the body part 122a, closer to one end in the longitudinal direction (closer to the bottom of FIG. 6A). The rail-shaped projecting part 122b extends in a direction parallel to the longitudinal direction of the body part 122a (to the vertical direction of FIG. 6A). One end of the rail-shaped projecting part 122b projects from the body part 122a (projects in the down direction in FIG. 6A). A substantially cylindrical engaging boss part 122c is formed on an upper surface of the rail-shaped projecting part 122b. A pair of engaging hook parts 122d, which are substantially hook-shaped when viewed laterally (see FIG. 6C), and which are symmetrically disposed with a bisector bisecting the length direction of the body part 122a (the horizontal direction in FIG. 6A) interposed therebetween, are formed on the upper surface of the body part 122a.

Substantially cylindrical first boss parts 122e are formed on both end parts of the body part 122a in the length direction (the horizontal direction in FIG. 6B) so as to project from a lower surface (plate surface) of the body part 122a. The pair of first boss parts 122e are disposed symmetrically about the bisector. A pair of substantially cylindrical second boss parts 122f are formed on the lower surface of the body part 122a so as to be disposed between the pair of first boss parts 122e, at a position further inward than the two end parts of the length direction. The pair of second boss parts 122f are disposed symmetrically about the bisector. Further, a pair of substantially cylindrical third boss parts 122g are formed on the lower surface of the body part 122a so as to be disposed between the pair of second boss parts 122f, at a position further inward than the pair of second boss parts 122f. The pair of third boss parts 122g are disposed symmetrically with the bisector interposed therebetween.

As illustrated in FIGS. 6A, 6B, and 6C, projecting parts PP are formed at a distal end of the pair of first boss parts 122e and of the pair of second boss parts 122f, and the boss parts 122e, 122f appear to be substantially L-shaped when viewed from the side.

The description now relates again to FIGS. 4 and 5. A guide groove 121a for guiding the rail-shaped projecting part 122b of the disc guide 122 is formed on the movable plate 121. The guide groove 121a is a long hole extending in the transport direction of the optical disc D (the direction of the arrow C). A pair of attachment grooves 121b in the shape of a long hole, which are disposed symmetrically so as to have the guide groove 121a interposed therebetween, are formed on the movable plate 121. The pair of engaging hook parts 122d of the disc guide 122 are slidably attached to the pair of attachment grooves 121b.

An upper side (obverse side) of the movable plate 121 is provided with a turning arm 123 made of sheet metal and capable of turning about a shaft of rotation A2. An engaging hole 123a into which the engaging boss part 122c of the disc guide 122 slidably attached to the movable plate 121 engages is formed closer to one end of the turning arm 123 in the length direction. The shape of the engaging hole 123a is adjusted such that the engaging boss part 122c can be swung relative to the turning arm 123 by the turning of the turning arm 123.

A coil spring (not shown), one end of which is attached to the body part 121, has another end attached to the turning arm 123. In FIG. 4, a rotational force in the clockwise direction is applied to the turning arm 123 by this coil spring. A distal end of the disc guide 122 (a distal end of the rail-shaped projecting part 122b) that slides together with the rotation of the turning arm 123 in the clockwise direction (moving downward in FIG. 4) abuts a torsion coil spring SP attached to the movable plate 121. For this reason, the coil spring ceases to cause the turning arm 123 to rotate in the clockwise direction in the state in FIG. 4. The state in FIG. 4 is equivalent to a state prior to when the optical disc D is inserted into the optical disc device 1.

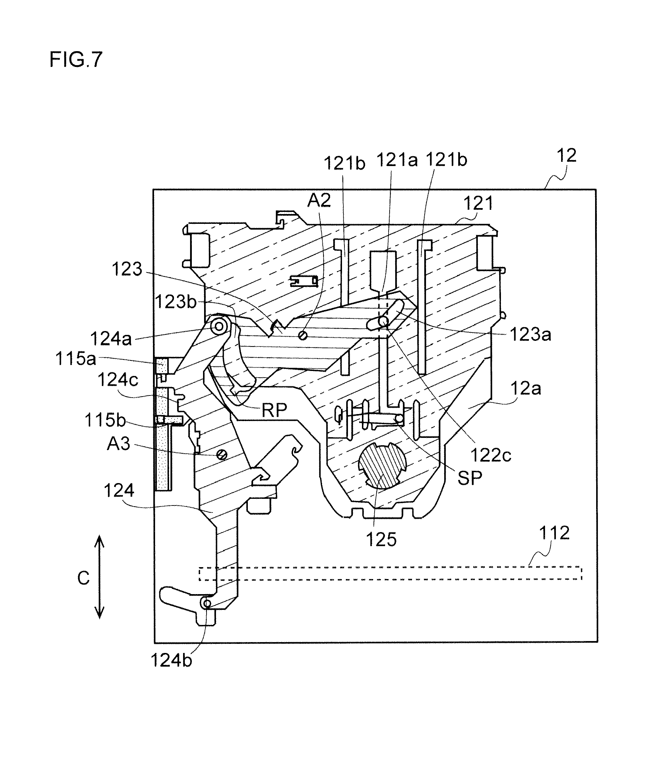

An engaging hole 123b into which an engaging pin 124a provided closer to one end of a locking arm 124 in the length direction (in FIG. 4, projecting toward the back in the direction perpendicular to the paper plane) engages is formed on the other end of the turning arm 123 in the length direction. The hole shape of the engaging hole 123b has been adjusted such that the engaging pin 124a of the locking arm 124 can be swung relative to the turning arm 123 by the turning of the turning arm 123. The engaging hole 123b is provided with locking positions RP at which it is possible to coordinate the movement of the turning arm 123 and that of the locking arm 124. The locking positions RP are provided at a total of two points at both end parts of the engaging hole 123b (see FIG. 4; as well as FIG. 7, to be described below).

The locking arm 124, made of sheet metal, is provided to the upper side (obverse side) of the body part of the upper chassis 12 so as to be able to turn about a shaft of rotation A3. The locking arm 124 is provided so as to be able to slide in the transport direction (the direction of the arrow C in FIG. 4). The amount of sliding is restricted to a predetermined amount, using, for example, abutment between one part of the locking arm 124 and one part of the upper chassis 12. As described above, the engaging pin 124a which engages with the engaging hole 123b of the turning arm 123 is provided closer to the one end of the locking arm 124 in the length direction. Also, an engaging pin 124b capable of engaging with the optical disc D inserted into the optical disc device 1 (in FIG. 4, projecting away in the direction perpendicular to the plane of the drawing) is provided closer to the other end of the locking arm 124 in the length direction.

A coil spring (not shown), one end of which is attached to the upper chassis 12, has another end attached to the locking arm 124. This coil spring acts to apply a rotational force, in the counterclockwise direction in FIG. 4, to the locking arm 124. The turning by this rotational force is stopped by contact between the engaging pin 124b of the locking arm 124 (the one provided closer to the other end) and the upper chassis 12 (equivalent to the state in FIG. 4). An engaging protrusion 124c (see FIG. 5) bent and formed so as to project from the lower surface of the locking arm 124 is formed on the locking arm 124. In a case where the locking arm 124 has moved downward in FIG. 4, the engaging protrusion 124c engages with a part of the drive mechanism 115 for causing the movable plate 121 to turn, and makes it possible for the movable plate 121 to be turned by the drive mechanism 115.

### (Operation of the optical disc device)

The operation of the optical disc device 1 configured as above shall now be described. The optical disc device 1 of the present embodiment plays back and/or records information with respect to an optical disc D1 having a diameter of 12 cm (a large-diameter disc) as well as an optical disc D2 having a diameter of 8 cm (a small-diameter disc).

### 1. Using a large-diameter optical disc

Firstly, the description shall begin with the operation in a case where the optical disc D1 having a diameter of 12 cm is used. In the description, with respect to the directions in which the optical disc D1 is transported by the transport roller 112, the direction in which the optical disc D1 is inserted into the device is expressed as the "insertion direction" (similar also in the case of the small-diameter optical disc D2, to be described below). When the optical disc D1 is inserted from the opening 10 of the optical disc device 1 (see FIG. 2), the insertion of the optical disc D1 is detected by a sensor (not shown) provided in the vicinity of the opening 10. Due to this detection, the transport roller 112 begins driving, and the optical disc D1 starts to be transported into the device. At this stage, the turning arm 123 and the locking arm 124 adopt the state in FIG. 4.

As the optical disc D1 is being transported (inserted) into the device, the engaging pin 124b of the locking arm 124 is pressed against the optical disc D1. Due to this pressing the locking arm 124 turns in the clockwise direction (figuratively represented in FIG. 4) about the shaft of rotation A3. As a result thereof, the engaging pin 124a of the locking arm 124 leaves the locking position RP of the engaging hole 123b of the turning arm 123. Also, in this state, the optical disc D1 being transported by the transport roller 112 assumes a state of abutting against the disc guide 122.

In the state where the engaging pin 124a of the locking arm 124 has escaped from the locking position RP, the turning arm 123 turns without correspondingly moving with the locking arm 124. The disc guide 122 is slid in the insertion direction (the upward direction in FIG. 4) by the transport of the optical disc D1 by the transport roller 112, and, in association therewith, the turning arm 123 also rotates (in the counterclockwise direction in FIG. 4). When the turning arm 123 turns a predetermined amount, the engaging pin 124a of the locking arm 124 reaches the locking position RP that is at the opposite side compared to before the beginning of the turning. FIG. 7 illustrates this state.

In the state where the engaging pin 124a of the locking arm 124 is present at the locking position RP, the locking arm 124 is slid in the direction inverse to the insertion direction of the optical disc D1 by the turning of the turning arm 123 associated with the sliding of the disc guide 122 (movement associated with the transport of the optical disc D1 by the transport roller 112). The sliding is restricted to a predetermined amount of travel; at a point in time where the travel of the sliding arrives at a boundary position, the disc guide 122 is no longer able to move any further in the insertion direction.

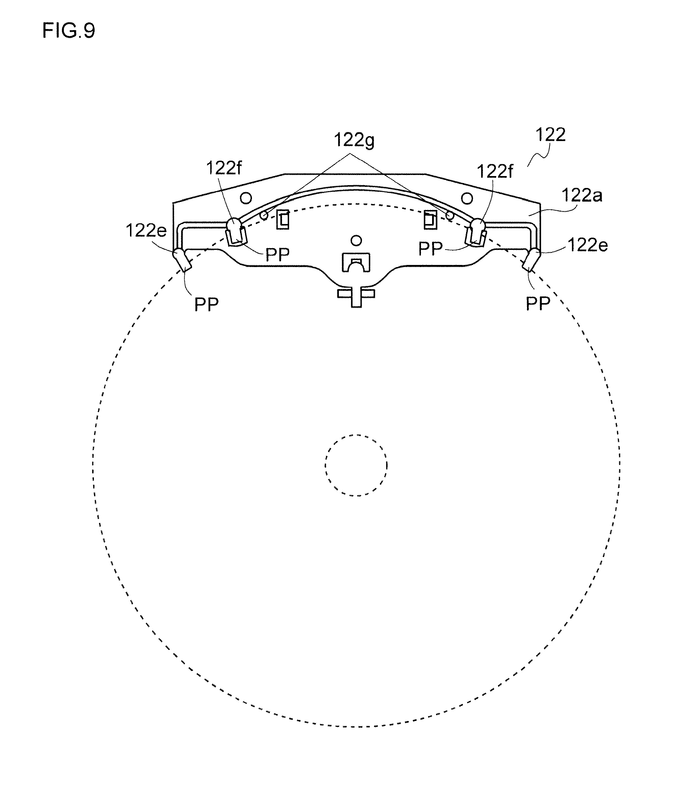

As described above, the disc guide 122 is provided with the pair of first boss parts 122e and the pair of second boss parts 122f. The optical disc D1 being transported into the device is guided to a predetermined position while also abutting as appropriate against the boss parts 122e, 122f. After the disc guide 122 has stopped moving, the optical disc D1 assumes a state of abutting against the second boss parts 122f of the disc guide 122 (see FIG. 9). Thereafter, the optical disc D1 is unable to move any further in the insertion direction. Specifically, the pair of second boss parts 122f provided to the disc guide 122 function as regulating units for regulating the amount the optical disc D1 moves in the insertion direction. In the present embodiment, the optical disc D1 and the third boss parts 122g do not abut each other in the state where the optical disc D1 and the second boss parts 122f are abutting each other (see FIG. 9).

When the locking arm 124 moves in the direction inverse to the insertion direction, a part 115b of a member constituting the drive mechanism 115 and the engaging protrusion 124c of the locking arm 124 (see FIG. 7) engage together (FIG. 7 illustrates the state before engaging), and a sliding part 115a included in the drive mechanism 115 (see FIG. 7) begins to move toward the direction opposite to the insertion direction. A cog wheel driven by the motor 111 (see FIG. 3) and a rack which meshes with this cog wheel (both not shown) are used to cause the sliding part 115a to move.

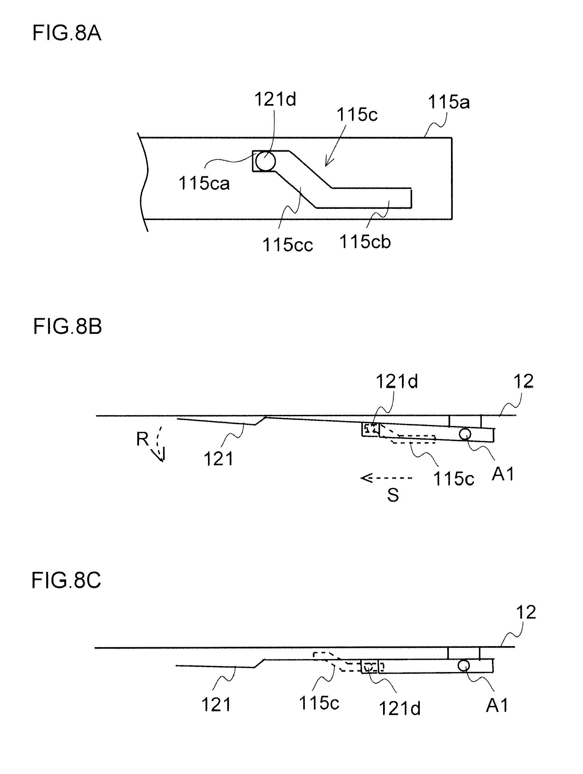

FIGS. 8A, 8B, and 8C are drawings for describing the configuration and action of the sliding part 115a comprised in the drive mechanism 115 provided to the optical disc device 1 of the present embodiment. As illustrated in FIG. 8A, a cam groove 115c is formed on the sliding part 115a provided to the drive mechanism 115. The cam groove 115c comprises a first groove 115ca and a second groove 115cb extending in a direction parallel to the transport direction of the optical disc D1 (the direction of arrow C in FIG. 7). The positions of the first groove 115ca and the second groove 115cb have been shifted in the vertical direction and in the horizontal direction (the same direction as the transport direction). A third groove 115cc included in the cam groove 115c is an inclined groove for connecting the first groove 115ca and the second groove 115cb.

An engaging pin 121d attached to the side surface of the movable plate 121 (see FIG. 5) engages with the cam groove 115c. FIG. 8A is a state prior to when the sliding part 115a begins to move, in a case where the optical disc D1 is being inserted into the device. When the sliding part 115a begins to move in the direction inverse to the insertion direction, the cam groove 115c also beings to move, in the direction of the arrow S illustrated in FIG. 8B. For this reason, the engaging pin 121d attached to the movable plate 121 moves along the cam groove 115c, and the movable plate 121 begins to turn about the shaft of rotation A1 in the direction of the arrow R illustrated in FIG. 8B.

When the engaging pin 121d reaches the second groove 115cb constituting the cam groove 115c, the movable plate 121 stops turning (the state in FIG. 8C). In this state, clamping (chucking) of the optical disc D1 by the turntable 113 and the clamper 125 attached to the movable plate 121 is achieved. The chucking efficacy of the optical disc D1 is high, because the chucking operation is performed in a state where the optical disc D1 has been positioned in the insertion direction by the second boss parts 122f provided to the disc guide 122.

The abutment of the optical disc D1 and the disc guide 122 against each other is released by this chucking operation. Further, although a concern is presented in that, with impact generated during the chucking operation, there may be a collision between the optical disc D1 and the optical pickup 114, the projecting parts PP provided to the distal end of the second boss parts 122f of the disc guide 122 prevent contact (collision) between the optical disc D1 and the optical pickup 114. Specifically, the projecting parts PP are equivalent to an example of the contact prevention unit of the present invention.

Thereafter, when the turntable 113 is caused to rotate by the drive of the motor, the optical disc D1, too, is caused to rotate. Information on the optical disc D1 is played back and/or information is written onto the optical disc D1 while the optical pickup 114 is moving as appropriate along the guide shaft 116. The optical disc D1 starts to be ejected by the user using an operation of a remote control or the like, but this operation is substantially reverse to the aforedescribed insertion operation for the optical disc D1, and therefore a description herein has been forgone.

### 2. Using a small-diameter optical disc

Next, the operation in the case where the optical disc D2 having a diameter of 8 cm is used shall now be described. When the optical disc D2 is inserted from the opening 10 of the optical disc device 1 (see FIG. 2), the insertion of the optical disc D2 is detected by a sensor (not shown) provided in the vicinity of the opening 10. Due to this detection, the transport roller 112 begins driving, and the optical disc D2 starts to be transported into the device.

Since the optical disc D2 having a diameter of 8 cm has a small diameter, the optical disc D2 and the disc guide 122 will not abut each other in the state where the engaging pin 124b of the locking arm 124 is pressed against the optical disc D2 as the optical disc D2 is being transported (inserted) into the device. For this reason, a state is assumed where the optical disc D2 and the disc guide 122 abut against each other while the engaging pin 124a of the locking arm 124 remains present at the locking position RP.

In the state where the engaging pin 124a of the locking arm 124 is present at the locking position RP, the locking arm 124 is slid in the direction inverse to the insertion direction of the optical disc D2 by the turning of the turning arm 123 associated with the sliding of the disc guide 122 (movement associated with the transport of the optical disc D2 by the transport roller 112). The sliding is restricted to a predetermined amount of travel; at a point in time where the travel of the sliding arrives at a boundary position, the disc guide 122 is no longer able to move any further in the insertion direction.

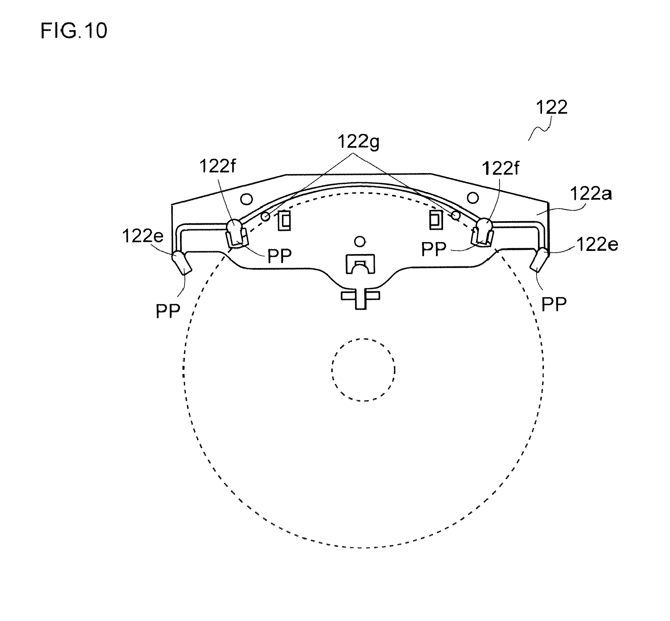

As described above, the disc guide 122 is provided with the pair of first boss parts 122e, the pair of second boss parts 122f, and the pair of third boss parts 122g. The optical disc D2 being transported into the device is guided to a predetermined position while also abutting, as appropriate, the boss parts 122e, 122f, 122g. After the disc guide 122 has stopped moving, the optical disc D2 assumes a state of abutting the third boss parts 122g of the disc guide 122 (see FIG. 10). Thereafter, the optical disc D2 is unable to move any further in the insertion direction. Specifically, the pair of third boss parts 122g provided to the disc guide 122 function as regulating units for regulating the amount the optical disc D2 is moved in the insertion direction. The optical disc D2 and the second boss parts 122f do not abut each other in the state where the optical disc D2 and the third boss parts 122g are abutting each other (see FIG. 10).

When the locking arm 124 moves in the direction inverse to the insertion direction, the part 115b of the member constituting the drive mechanism 115 and the engaging protrusion 124c of the locking arm 124 (see FIG. 7) engage together, and the sliding part 115a included in the drive mechanism 115 (see FIG. 7) begins to move toward the direction opposite to the insertion direction. The chucking operation thereafter is similar to the aforedescribed case of the large-diameter optical disc D1, and therefore a more detailed description thereof has been forgone.

In the case of the small-diameter optical disc D2, too, the chucking efficacy of the optical disc D2 is high because the chucking operation is performed in a state where the optical disc D2 has been positioned in the insertion direction by the third boss parts 122g provided to the disc guide 122. Further, although a concern is presented in that, with impact generated during the chucking operation, there may be a collision between the optical disc D2 and the optical pickup 114, the projecting parts PP provided to the distal end of the second boss parts 122f of the disc guide 122 prevent contact (collision) between the optical disc D2 and the optical pickup 114.

### (Summary of the Actions and Effects of the Invention)

With the optical disc device 1 of the present embodiment, a configuration is adopted in which the disc guide 122 for guiding the movement of the optical disc D is separately provided with the second boss parts 122f (equivalent to the first regulating unit of the present invention) for abutting the large-diameter optical disc D1 and for regulating the amount the large-diameter optical disc D1 is moved in the insertion direction, and with the third boss parts 122g (equivalent to the second regulating unit of the present invention) for abutting the small-diameter optical disc D2 and for regulating the amount the small-diameter optical disc D2 is moved in the insertion direction. The second boss parts 122f also have a function for guiding the large-diameter and small-diameter optical discs to a predetermined position. The third boss parts 122g also have a function for guiding the movement of the small-diameter disc D2. For this reason, in both the case where the large-diameter optical disc D1 is brought into the optical disc device 1, and the case where the small-diameter optical disc D2 is brought into the optical disc device 1, the chucking efficacy of the optical disc D can be improved. Accordingly, the optical disc device 1 of the present embodiment is very convenient for the user.

With the present embodiment, the third boss parts 122g are configured so as not to abut the large-diameter optical disc D1. This is because the presence of the third boss parts 122g prevents the guided position of the large-diameter optical disc D1 from shifting and prevents the chucking efficacy from decreasing. However, the third boss parts 112g may also abut the large-diameter optical disc D1, provided there is an adjustment so as to prevent the chucking efficacy of the large-diameter optical disc D1 from decreasing.

### (Other)

The embodiment illustrated above is an illustrative example of the present invention, the configuration of the embodiment illustrated above not being provided by way of limitation to the present invention.

For example, according to the embodiment illustrated above, a configuration is adopted in which a part of the upper chassis 12 (the movable plate 121) turns and the turntable 113 and the clamper 125 clamp (chuck) the optical disc D. However, the scope of application of the present invention is not limited to this configuration. For example, the present invention can also be applied in a configuration in which no portion of the upper chassis 12 turns, but rather a part of the lower chassis 11 (for example, the base 117 to which the turntable 113 and the optical pickup 114 are attached) turns, whereby chucking is achieved.

Further, according to the embodiment illustrated above, a configuration is adopted in which the second boss parts 122f and the third boss parts 122g for regulating the travel in the insertion direction are provided in respective pairs. There being no limitation to this configuration, with respect the each of the different types of bosses, a plurality of sets of bosses may also be provided. Changes may also be made as appropriate to the positions at which and/or the shapes in which each of the bosses 122f, 122g is provided.

According to the embodiment illustrated above, a configuration is adopted in which the third boss parts 122g of the disc guide 122 do not have the projecting parts PP provided to the distal ends thereof, but a configuration may also be adopted in which the third boss parts 122g, too, have projecting parts provided to the distal ends thereof, similar with respect to the second boss parts 122f. Further, depending on the case, a configuration may also be adopted in which the projecting parts PP provided to the distal ends of the second boss parts 122f are not provided.

According to the embodiment illustrated above, the optical disc device 1 has been configured so as to be able to provide support for two types of optical discs having different diameters. However, the present invention can be adopted also in a case where an optical disc device is able to provide support for three or more types of optical discs having different diameters. In such a case, the types of regulating units for regulating the travel of the optical disc in the insertion direction may be increased in correspondence with the number of types of optical discs having different diameters. Also, in such a case, it is also possible, depending on the case, to adopt a configuration in which some of the regulating units are shared for use with a plurality of types of optical discs having different diameters.

## Claims

1. An optical disc device, comprising:
a disc guide unit for guiding movement of an optical disc while also sliding together with the optical disc as the optical disc is being inserted into the device,
wherein:
a plurality of types of regulating units for abutting the optical disc and regulating travel of the optical disc in an insertion direction are provided to the disc guide unit so as to be changed in accordance with the diameter of the optical disc.

2. The optical disc device according to Claim 1, wherein:
travel in the insertion direction is changed in the disc guide unit in accordance with the diameter of the optical disc.

3. The optical disc device according to Claim 1 or 2, wherein:
the plurality of types of regulating units comprise a first regulating unit for regulating the travel of a large-diameter optical disc in the insertion direction and a second regulating unit for regulating the travel of a small-diameter optical disc in the insertion direction.

4. The optical disc device according to any of Claims 1 to 3, further comprising:
a first chassis, and
a second chassis provided so as to cover an opening of the first chassis,
the first chassis being provided with a loading unit which can be made to rotate by a drive unit and on which the optical disc is loaded, and
the second chassis being provided with a holding unit for clamping the optical disc together with the loading unit and the disc guide unit.

5. The optical disc device according to Claim 4, wherein:
the second chassis is provided with a movable part which can be turned and to which the disc guide unit and the holding unit are attached,
the turning of the movable part being used to allow the optical disc to be clamped by the loading unit and the holding unit.

6. The optical disc device according to Claim 5, wherein:
the disc guide unit is provided with a contact prevention unit for preventing contact between the optical disc and an optical pickup disposed on the first chassis.

7. The optical disc device according to any of Claims 1 to 6, wherein:
the disc guide unit has a plate-shaped body part; and a plurality of boss parts projecting from a plate surface of the body part, and serving as the regulating units.
